# EUROPEAN PATENT SPECIFICATION

(11) **EP 4 441 574 B1**
(45) Date of publication and mention of the grant of the patent: **14.10.2026**
(21) Application number: 23845850.9
(22) Date of filing: 15.07.2023
(51) Int. Cl.: G06N 3/044, G05D 1/222, G05D 1/622, G06N 3/088

(54) **SELF-LEARNING COMMAND & CONTROL MODULE FOR NAVIGATION (GENISYS) AND SYSTEM THEREOF**
SELBSTLERNENDES BEFEHLS- UND STEUERMODUL ZUR NAVIGATION (GENESYS) UND SYSTEM DAFÜR
MODULE DE COMMANDE ET DE CONTRÔLE D'AUTO-APPRENTISSAGE POUR LA NAVIGATION (GENISYS) ET SYSTÈME ASSOCIÉ

(30) Priority: 27.07.2022 IN 202221024830
(43) Date of publication of application: 09.10.2024
(73) Proprietor: Sagar Defence Engineering Private Limited, Maharashtra 400066 (IN)
(72) Inventor: PARASHAR, Nikunj, Mumbai, Maharashtra 400066 (IN); BABBAR, Mridul, Mumbai, Maharashtra 400066 (IN); DANG, Lakshay, Mumbai, Maharashtra 400066 (IN); PATIL, Saurabh, Mumbai, Maharashtra 400066 (IN); SHARMA, Akshay, Mumbai, Maharashtra 400066 (IN); PARASHAR, Shilpa, Mumbai, Maharashtra 400066 (IN)
(74) Representative: Tahtadjiev, Konstantin
(86) International application number: PCT/IN2023/050689
(87) International publication number: WO 2024/023835

(56) References cited:
- EP-A2- 2 380 066
- EP-B1- 2 380 066
- US-A1- 2020 004 255
- US-A1- 2022 055 749
- MARKUS LAURINEN: "Remote and autonomous ships, The next steps", ADVANCED AUTONOMOUS WATERBORNE APPLICATIONS (AAWA), 17 June 2016 (2016-06-17), XP055283762, Retrieved from the Internet <URL:http://www.rolls-royce.com/~/media/Files/R/Rolls-Royce/documents/customers/marine/ship-intel/aawa-whitepaper-210616.pdf> [retrieved on 20160627]

## Description

### CLAIM OF PRIORITY

The present invention takes priority from Indian patent application titled "Self-Learning Command and Control Module (GENISYS)", application number: 202221024830 post-dated to 27 July 2022.

### FIELD OF INVENTION

The present invention relates to control and manage maneuver of a vehicle. Particularly, the present invention pertains to maneuver control and management of a ground, marine or aviation vehicle. More particularly, the present invention relates to maneuver control and management in situations of loss of communication from a base station of the vehicle.

### BACKGROUND OF THE INVENTION

Ground, marine as well as aviation vehicles are known to be manned as well as unmanned. Routes and enroute unknowns of such vehicles are predictable as well as unpredictable.

Unmanned vehicles are controlled by sensors and communication. CN3067575 discloses self-learning autonomous navigation particularly for unmanned underwater vehicle based on an improved recurrent neutral network. CN109521454 discloses navigation method based on cubature Kalman filter. CN102778237 provides a map self-learning system in vehicle navigation, wherein the self-learning function of an electronic navigation map in a vehicle navigation system is achieved by curve fitting and a prediction algorithm, so that the vehicle positioning precision is enhanced and the electronic navigation map is perfected.

EP2380066B1 (referred to as D1) discloses distinct combinations to choose from as an automated method, wherein from a set of options, each option defining a distinct combination of course and speed, a grade which is indicative of the desirability of that option with respect to each of the obstacles and with respect to each of a plurality of objectives, for each option summing the grades assigned to that option with respect to all obstacles, wherein the preferred option is the option whose summed grades is indicative of the greatest desirability of that option.

US2022/055749A1 (referred to as D2) discloses an unmanned aerial vehicle (UAV) comprising a flight package and a computer including a processor and electronically stored instructions, executable by the processor, for using data received from an image-acquisition device as input to a predictor that has been computationally trained, implying pre-trained based on computation, to identify and classify objects appearing in images acquired by the image-acquisition device during flight. A communication facility is configured to interact with terrestrial and airborne control systems.

Markus Laurinen "Remote and autonomous ships, The next steps", Advanced Autonomous waterborne Applications (AAWA)17 June 2016 (referred to as D3) is a generic technical paper discussing techno-commercial aspects of autonomous shipping, particularly pointing out that ".... *Cooperation is required between various actors who can master the different technological areas. However, engaging in such innovative efforts must realize a business case for the actors involved - both in the short and long term.....".*

There are challenges for vehicles which are manned at times but unmanned in different situations. Such challenges become complex when communication breaks down!

The present invention attempts to bridge this significant industrial requirement.

### OBJECT OF THE INVENTION

It is an object of the present invention to invent a device and method thereof that captures discrete instructions under operation with operator on-board and integrates such instructions as self-learning.

It is another object of the present invention to invent a device and method thereof thatcaptures instructions under operation by remote operator and integrates such instructions as self-learning.

It is yet another object of the present invention to invent a device and method thereof that captures macro as well as micro instructions by operators, while on-board as well as remotely and integrate such instructions as self-learning.

It is yet another object of the present invention to invent a device that is retro-fittable in any vehicle to make such vehicle suitable for autonomous operation, particularly inabsence of communication network.

### SUMMARY OF THE INVENTION

These objects are achieved by a navigation system for a land, air, marine or submarine vehicle, according to the combination of features of independent claim 1.

The present invention is a navigation system having a navigation module, named GENISYS, that is retro-fittable in any manned or unmanned road/aviation/marine/submarine vehicle. GENISYS has the capability to capture all operator instructions and commands including audio, manual, electrical, radio commands and convert them into an executable data/algorithm with time and position co-ordinates. GENISYS is connected, by hard wiring or wirelessly, with plurality of sensors and intelligence of the vehicle. GENISYS integrates intrinsic capabilities of the vehicle with executable data and algorithms developed from operator instructions and commands.

A drone, hereinafter termed as a platform or a vehicle, disposed with the navigation module is capable of self-navigating to an obstructed unknown destination or an obstructed unknown target even in absence of any communication network while an obstruction hinders a direct view of the target.

In the description below, the inventive hardware and software of the navigation module and the navigation system is described step by step resulting into such capability.

A navigation system around the vehicle comprises:
➢ Remote Control Workstation or RCW
➢ Navigation module or GENISYS including Command and Control unit and
➢ A plurality of perception sensors

Three types of controls deployed for the navigation module are
1. Manual Control
2. Mission Planning
3. Tactical Control

Manual control implies direct human control including throttle and steering control, either by being physically present in the tactical platform of vehicle particularly when the vehicle is road worthy vehicle or an airplane or a human carrying drone or a ship or a marine or a submarine; or remotely. In the mission planning type of control, before operation initialization, complete planning is executed. This planning includes how the vehicle should perform, in which scenario how it must behave, and all if-else this that or if commands and controlling factors are preplanned and fed to the RCW system. Data from multiple sensors is taken and graphed or shown or processes or used to generate user interface to perform the multiple jobs like control/monitor/eject/disturb/explode with the help of system/vehicle/platform. Tactical control includes wider guidance navigation and controlling system including handshaking with mission planning for decision-making in critical scenarios including scenarios like obstacle avoidance and reactive guidance, including multiple inputs and outputs. It maps the system with actual trajectory with desired trajectory. The difference is calculated and offset is fed to the system for learning, which helps system to progressively better match the actual trajectory with the desired trajectory.

Command Control Unit (CCU) comprises Self Learning Command Control Unit, Unmanned Control and Assessment & Correction platform. Manual Control controls the rudder and throttle of the engine directly without autonomous operation. The vehicle control gives the signal to VDC (Vehicle Direct Control) which manages all the controlling of the vehicle. Here, mixed signal type controlling operates where Command Control Unit processes the data, and it is carried forward to Vehicle Direct Control. Self-Learning Command Control Unit consists of sub-systems including Vehicle Guidance and Course Control.

Unmanned Control primarily relies on a plurality of perception sensors whose data is processed, assessed for precision and provides reactive guidance to mission planning.

With respect to autonomous maritime platforms, tactical platforms enable to exercise various mission sets such as sea denial, escort, survey, logistics, targeted counter abilities, etc. As such, such a platform will conduct assets planning by Mission Objectives, Data Collection and Analysis, Asset Availability and Capabilities, Optimization Algorithms, Resource Allocation, Dynamic Adaptation, and Communication and Coordination. By combining data analysis, optimization algorithms, and adaptive planning strategies, an autonomous maritime tactical platform can efficiently conduct assets planning for autonomous sea-going vessels. It optimizes the utilization of assets, enhances mission performance, and enables effective decision-making in dynamic maritime environments. Assessment and Correction Platform implements corrective measures and action taken to ensure that the tactical platform fulfills its objectives.

A plurality of perception sensors connected to the reactive guidance system include Accelerometer, Gyroscope, Compass, Magnetic Heading Sensor, Barometric Sensor, Multiple GNSS, Vision Sensor including camera, stereo camera, Omni camera, IR camera, Ultra-sonic sensor, Laser Range finder, Li-Dar, Sonar, Radar, Optical sensor, Depth sensor. Such type of sensor data using sensor fusion algorithms gives appropriate data. It is referred to as a computational methodology that aims at combining measurement from multiple sensors such that they jointly give more precise information on the measured system than any of the sensors alone.

The data from such sensor and data from human operator or third-party user or device helps to perform the critical tasks at Remote Control Workstation (RCW) with human operator in-loop. This data is used to course controlling of the platform or vehicle. Course control includes multiple movements of the platform or vehicle. Movement like roll, pitch, yaw, right, left, port, starboard, altitude gain, altitude decrease, thrust, throttle, gear shift, etc. are done by it.

With that those data from sensors are used to get feedback from the system in close control loop instead of open loop to monitor control and accept the data from system. As well as current system is platform agnostic which makes it able to work with closed loop as well as open loop system. In open loop system, the data is managed by perception/fusion sensor data management and the decision/control/monitoring/management is completed at Remote Control Workstation (RCW).

The vehicle or the tactical platform has a vehicle direct control including vehicle actuators maneuverable under manual control. Vehicle dynamics including speed, inclination etc. impacted by type of vehicle, weight, acceleration capabilities, night vision, turning radii, etc. and such navigational payloads and at the same time impacted by environmental scenario including terrain parameters which are applied to outputs of sensors to give a feedback to Mission Planning.

In the Manual Control mode, any command given by the human operator causing a change detected in throttle or a change in steering is saved in the self-learning module for subsequent autonomous operations. Importantly, although the perception sensors are not actively involved in navigational support in Manual Control, however, the perception sensors continue to generate dataset for self-learning in real time. Even if the vehicle is manually controlled, the perception sensors non-exhaustively collect information about path, surroundings including buildings and distance between them, terrain, drift, atmospheric pressure and build training dataset for use in Mission Planning and Tactical Control situations.

In the Mission Planning mode, the vehicle guidance module generates a path for the vehicle towards completing an assigned task to reach the prescribed destination with respect to a home position, by taking feedback from navigational payloads and perception sensors. The course control module generates commands for vehicle actuators for the assigned task. The perception sensors continue to generate dataset for self-learning in real time with respect to the assigned task, while vehicle guidance model updates dataset in real time.

In the Mission Planning mode with auto maneuvering with situational awareness and tactical control with deliberative collision avoidance, the vehicle guidance module generates a path for the vehicle towards completing an assigned task to reach the prescribed destination with respect to a home position, by taking feedback from navigational payloads and perception sensors. The course control module generates commands for vehicle actuators for the assigned task. The navigation system deploys deliberative payloads like AIS, the environmental scenario and assessment & Correction module for a precision navigation. The navigation system gets the collision related data from the prior information like map data including tree, mountain, building information and terrain information. The perception sensors continue to generate dataset for self-learning in real time with respect to the assigned task, while vehicle guidance model updates dataset in real time.

In the Mission Planning mode with auto maneuvering with situational awareness and tactical control with responsive collision avoidance, the navigation system uses data from cameras, LIDAR, SONAR, ADSB, besides AIS that provide real time data on which the reactive guidance makes course control (through assessment and correction module for collision avoidance. The perception sensors continue to generate dataset for self-learning in real time with respect to the assigned task, while vehicle guidance model updates dataset in real time.

The vehicle having assigned a known destination with respect to a home position calculates its path, which could be more than one. The path prediction is with prescribed preferences and limits based on a cognitive algorithm on a previously trained model from earlier real time dataset. The flight may be with a responsive collision avoidance technique or a deliberative collision avoidance technique.

Importantly, all above embodiments are with availability of a communication network including an internet communication or a satellite communication. The present invention is equally capable in absence of any or all kinds of communication network. The vehicle is assigned a task of reaching an unknown destination which is a drowning person needing help. The unknown destination is hidden behind a big obstruction, which is a ship. In this scenario, navigation is done on the basis of a localized frame of reference, in the form of an imaginary cuboid of situationally prescribed X, Y and Z dimensions created by a deep learning grid algorithm. The X, Y and Z dimensions are situationally prescribed based on a judgement that the home position, the unknown destination and the obstruction are well within the cuboid. The vehicle moves within the cuboid and knows its own relative position with respect to a home position with the help of compass, gyroscope, accelerometer, sonic sensors, cameras and other non-network devices and perception sensors. The vehicle, here a drone, predicts a safe height based on task type, weather condition and Location information inputted.

### DESCRIPTION OF DRAWINGS

Figure 1 is a representative view of capabilities of the present invention.
Figure 2A and 2B is a flow diagram of sub-modules of a navigation system of the present invention.
Figure 3 gives a segregated tabulation of a remote control workstation of the present invention.
Figure 4 gives a segmented tabulation of a navigation module of the present invention.
Figure 5 gives a segmented tabulation of a vehicle or a vehicle platform.
Figure 6 is a flow diagram of sub-modules of the navigation system pertaining to manual control.
Figure 7 is a logic diagram of navigational operations in a Manual Control.
Figure 8 is a representative view of alternative trajectories of the vehicle.
Figure 9 and 10 combined is a logic diagram of navigational operations in a Mission planning mode.

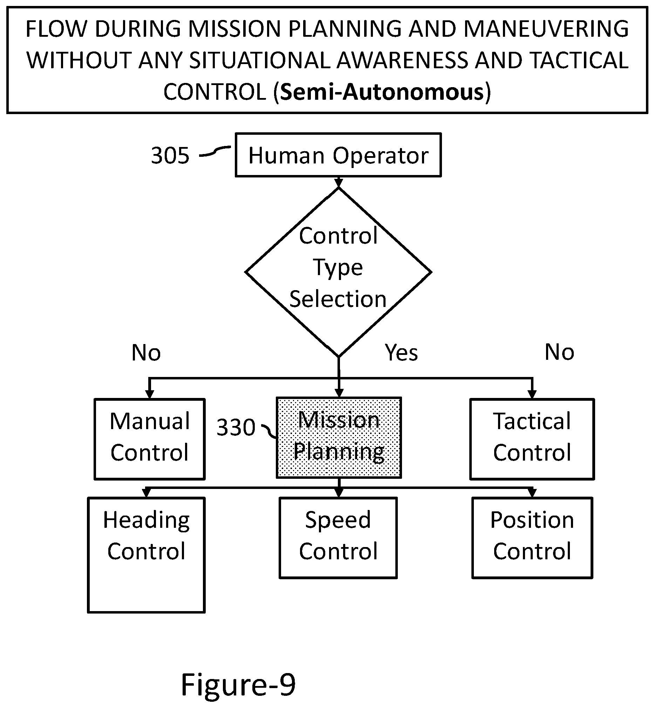

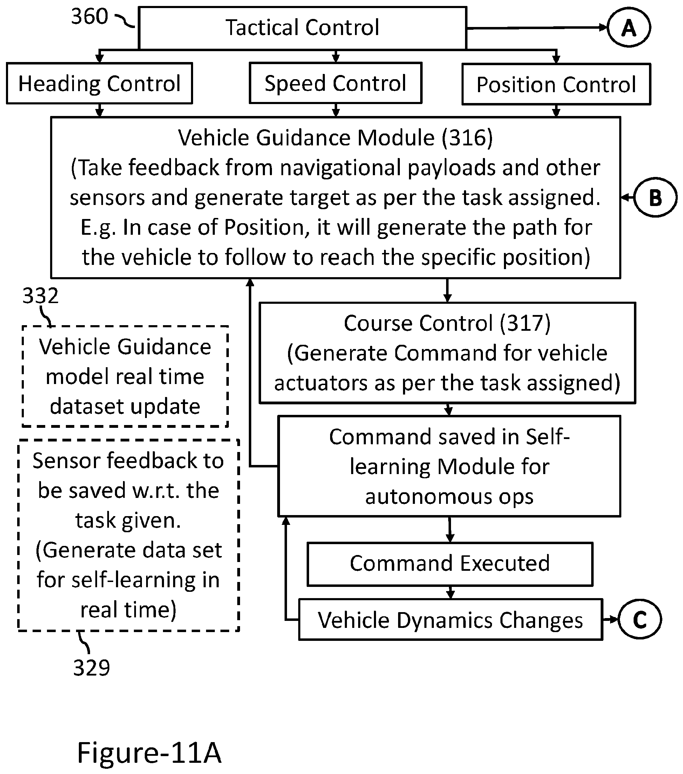

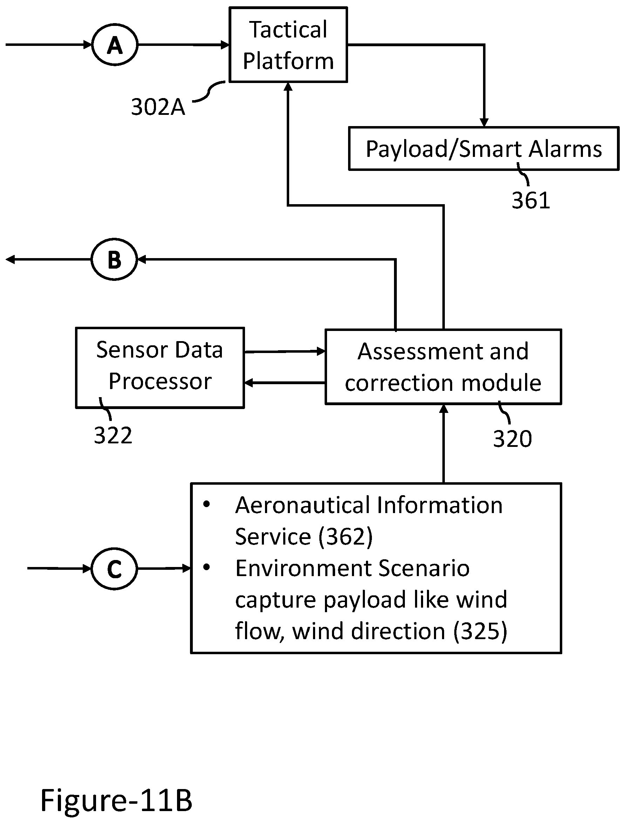

Figure 9 and 11A-11B combined is a logic diagram of navigational operations in the Mission Planning mode with auto maneuvering with situational awareness and tactical control with deliberative collision avoidance.

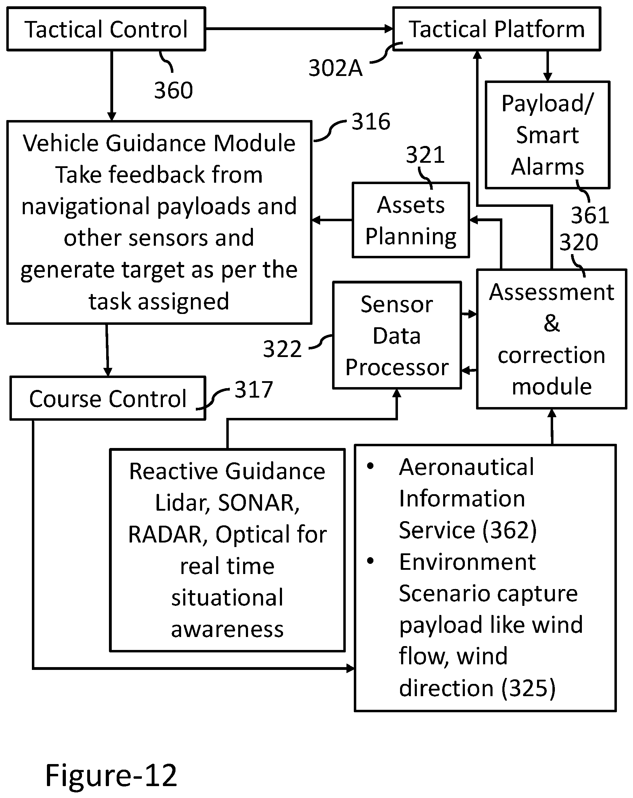

Figure 9 and 12 combined is a logic diagram of navigational operations in the Mission Planning mode with auto maneuvering with situational awareness and tactical control with responsive collision avoidance.

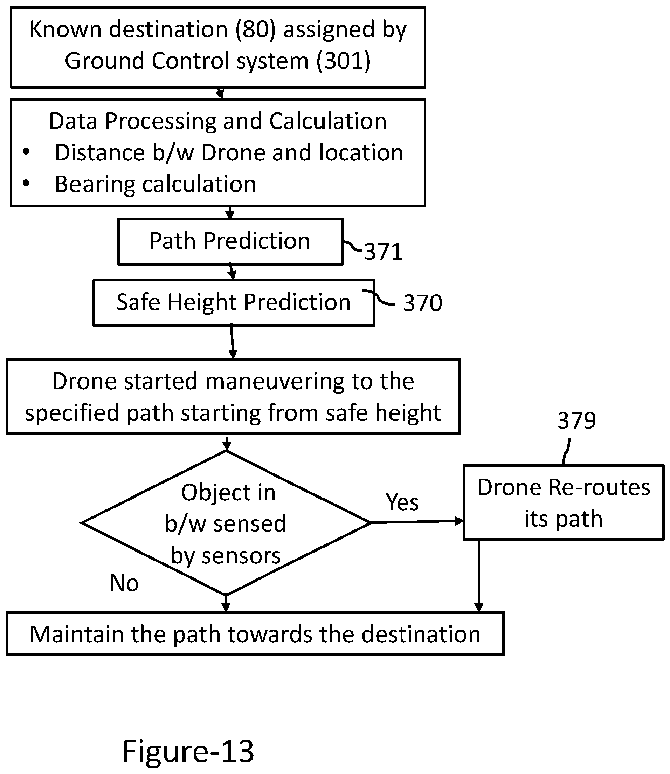

Figure 13 is a logic diagram of navigational operation in an illustrative situation.

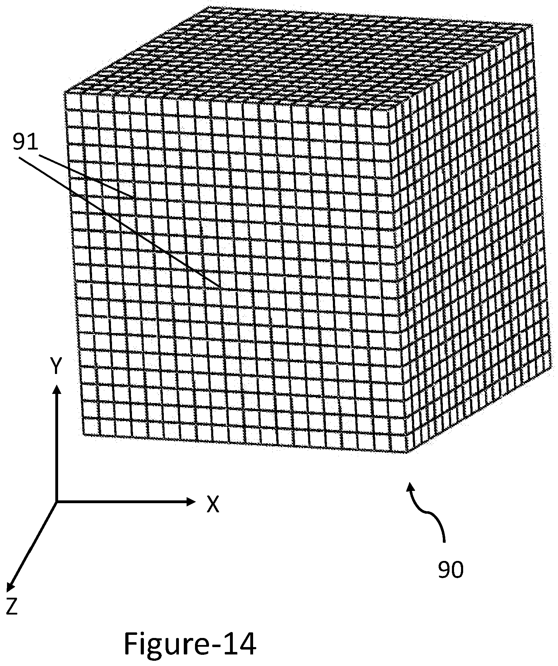

Figure 14A is a perspective view of an imaginary cuboid of situationally prescribed X, Y and Z dimensions in situations of absence of communication network.
Figure 14B is a sectional view of the imaginary cuboid with a vehicle at its core/center.

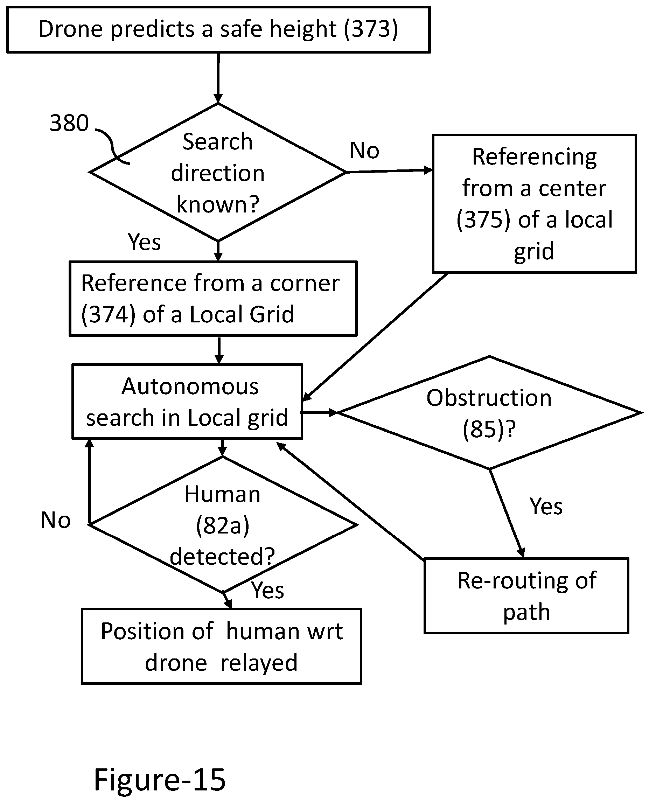

Figure 15 is a logic diagram of navigational operation in another illustrative situation.

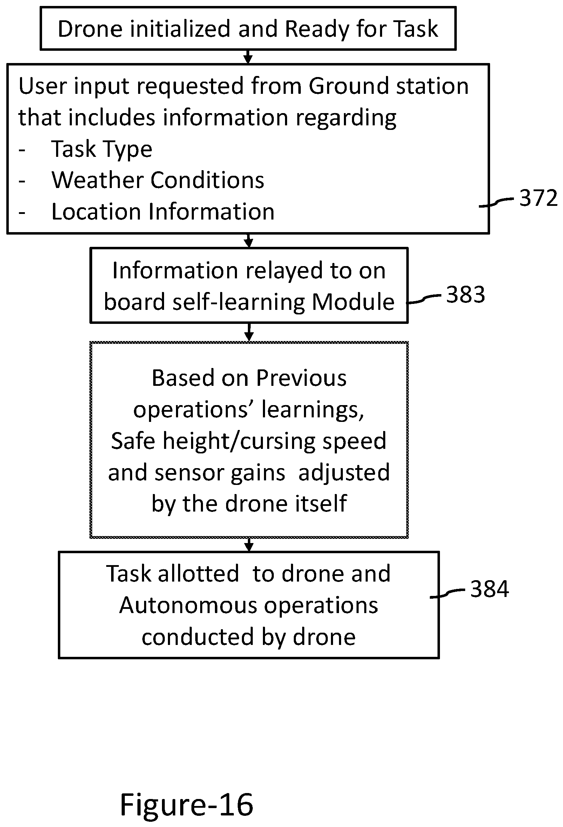

Figure 16 is a safe height prediction model in absence of a communication network.

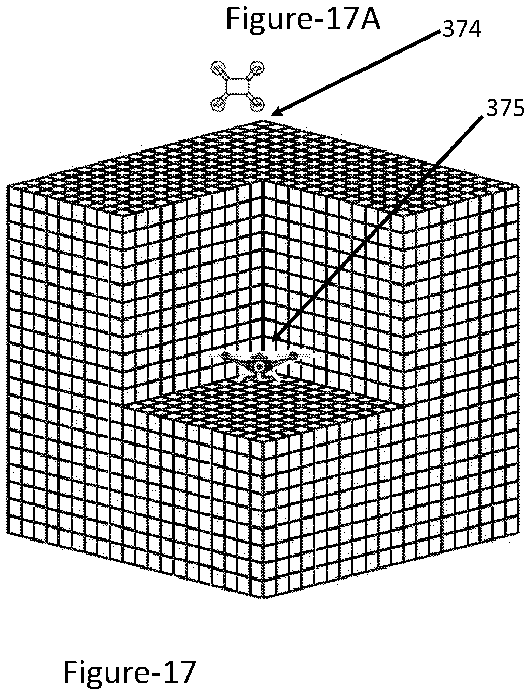

Figure 17 is a representative view of the vehicle with respect to the imaginary cuboid in a situation.

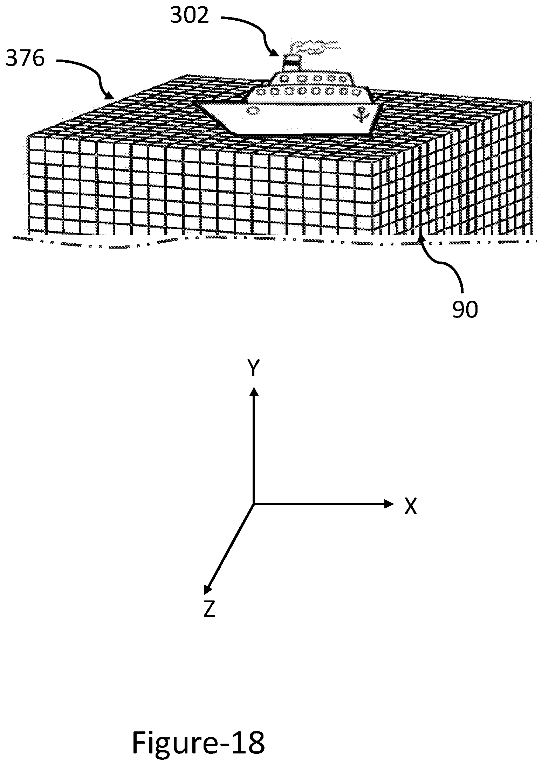

Figure 18 is a representative view of another vehicle with respect to the imaginary cuboid in another situation.

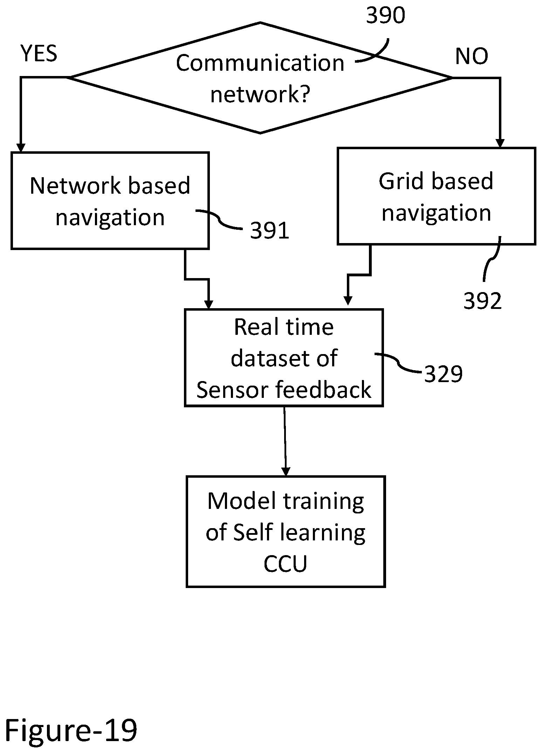

Figure 19 is a flow diagram of self-learning model in presence and in absence of communication network.

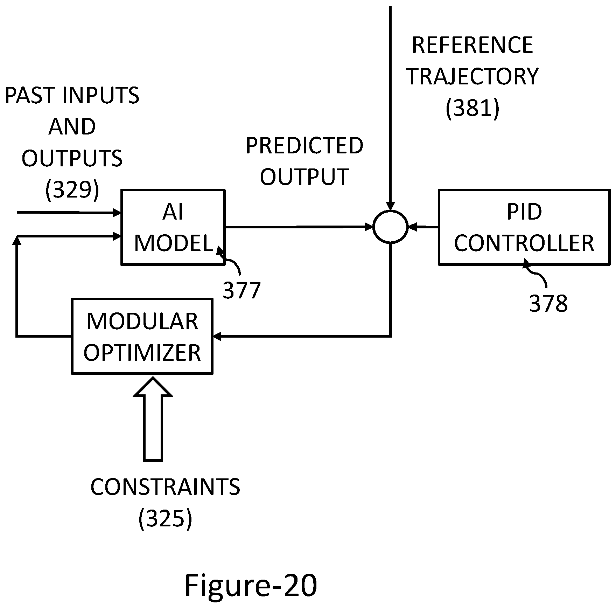

Figure 20 is a simplified line diagram of self-learning model driving a PID controller.

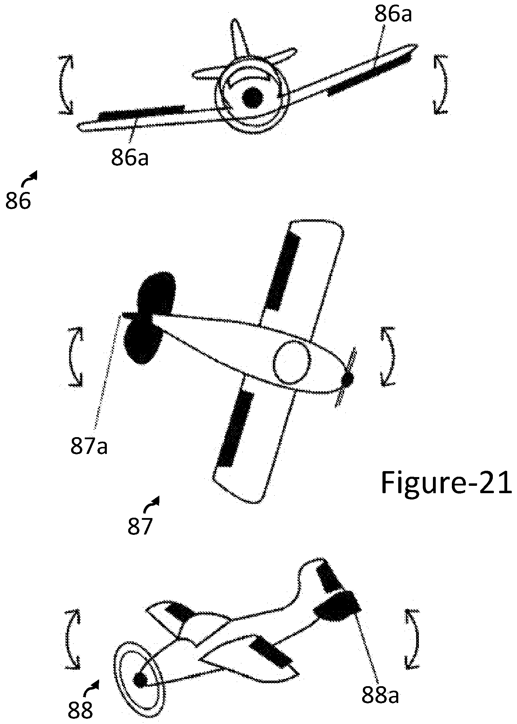

Figure 21 is illustrative different types of angular controls of an aviation vehicle.

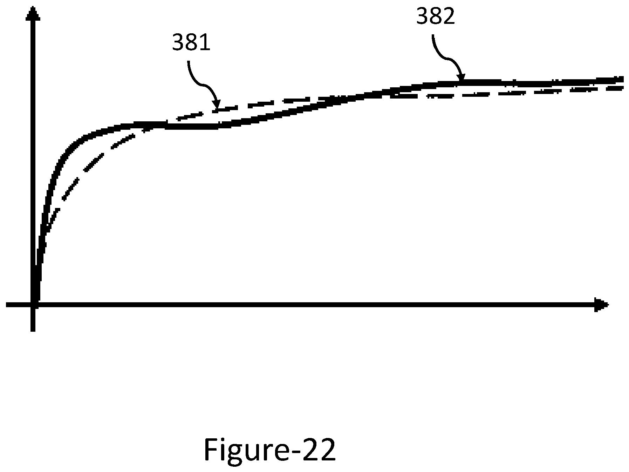

Figure 22 is an illustrative graph of a predicted and an actual trajectory of a vehicle.

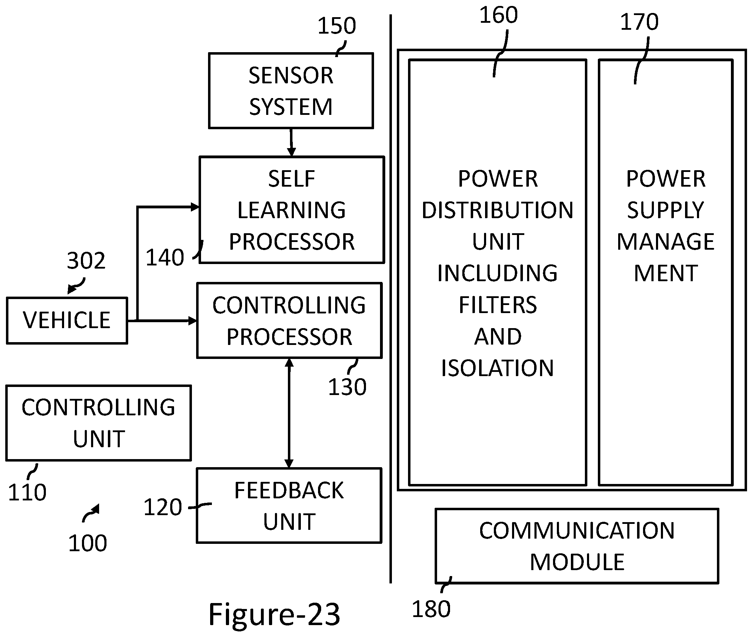

Figure 23 is a block diagram of hardware of the navigation module of the present invention.

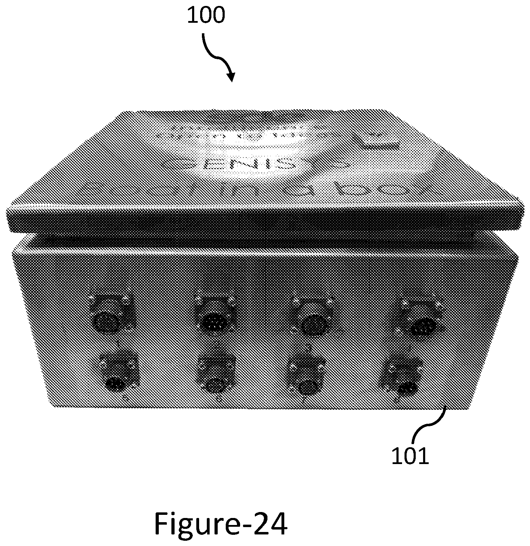

Figure 24 is a perspective view of the ready to deploy navigation module of the present invention.

### DETAILED DESCRIPTION OF THE INVENTION

The present invention is a navigation module, named GENISYS, that is retro-fittable in any manned orunmanned road/aviation/marine/submarine vehicle, and a system thereof. The preferred embodiment is described with the figures of unmanned aviation vehicle, commonly known as drone.

GENISYS and the system around it has the capability to capture all operator instructions and commands including audio, manual, electrical, radio commands and convert them into an executable data/algorithm with time and position co-ordinates.

GENISYS is connected, by hard wiring or wirelessly, with plurality of sensors and intelligence of the vehicle. GENISYS integrates intrinsic capabilities of the vehicle with executable data and algorithms developed from operator instructions and commands.

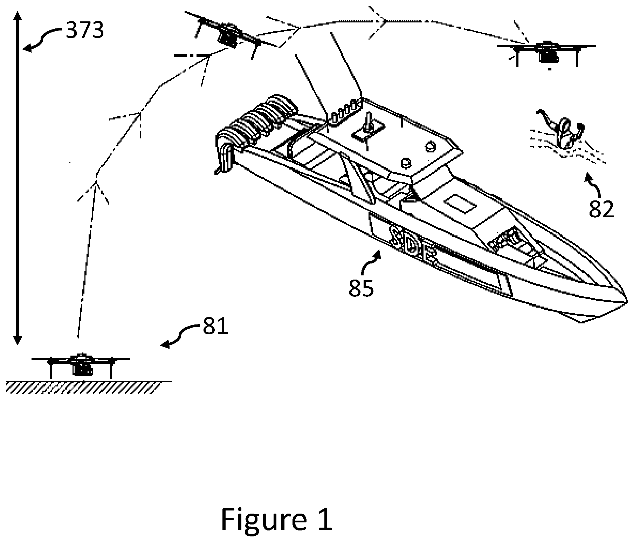

Figure 1, a drone, hereinafter termed as a platform or a vehicle (302), disposed with a navigation module (100) is capable of self-navigating to an obstructed unknown destination or an obstructed unknown target (82), here a drowning person, even in absence of any communication network. An obstruction (85), here a ship, obstructs a direct view of the target (82). In the description below, the inventive hardware and software of the navigation module (100) is described step by step resulting into such capability.

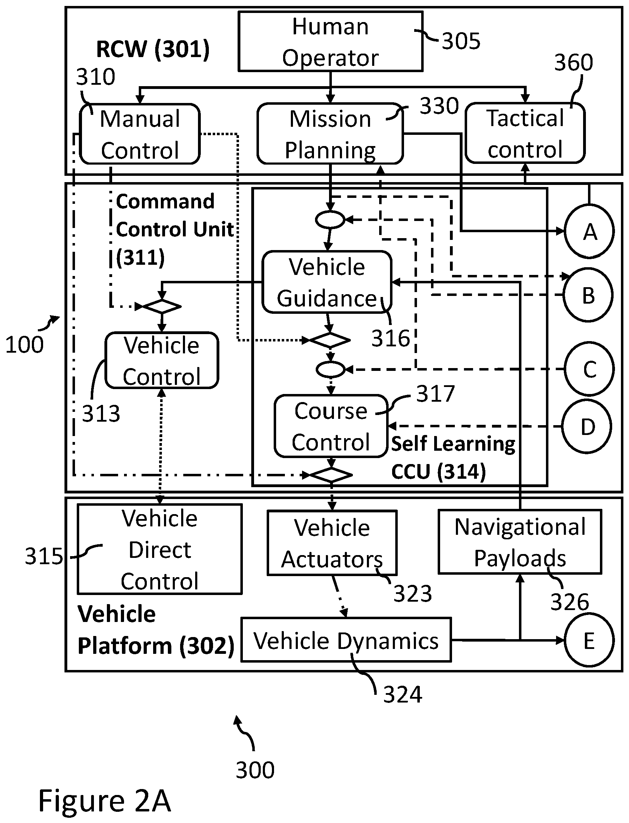

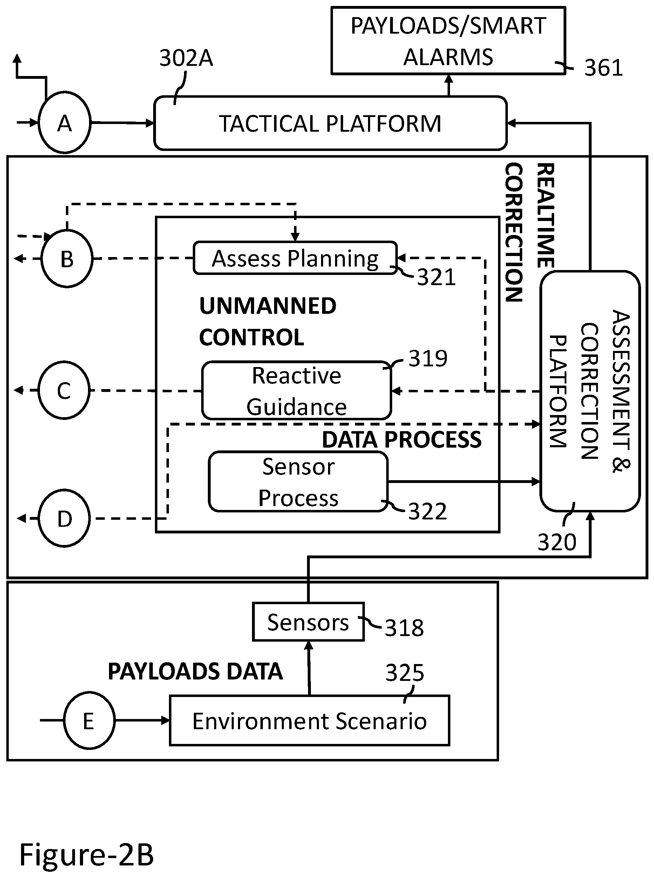

Figure 2A-2B, a navigation system (300) around a vehicle (302) comprises:
➢ Remote Control Workstation or RCW (301)
➢ Navigation module or GENISYS (100) including Command and Control unit (311) and the Vehicle Platform (302) including a tactical platform (302A)
➢ Perception sensors (318)

The vehicle (302) refers to a platform or a transport system or vehicle that provides a specific capability and effect on an action field. It is essentially a platform or a means of delivering various assets, weapons or equipment to the action space. Such vehicles/tactical platforms (302/302A) vary in size, mobility, function, depending on the operational requirements.

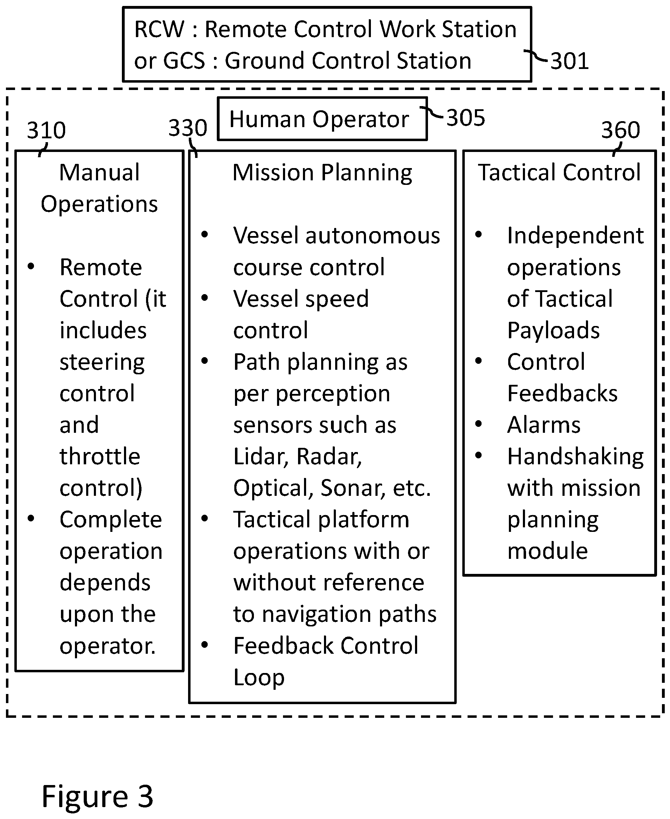

Remote Control Workstation or RCW (301) - RCW (301) or Ground Control Station (GCS) is a section whereby all command-and-control options are initiated, including initial commands and controls by a human Operator (305), responsible for all the operations to be going to be executed on a manual or a semi-autonomous or an autonomous system platform. The command-and-control includes the complete control and monitoring of the system data or system video or payload data or payload control or both. Figure 3.

Human Operator (305) is a person who is responsible for controlling or monitoring or controlling and monitoring of the system data or system video or payload data or payload control or both. Human Operator (305) performs multiple tasks like Manual Operation (310), Mission Planning (330) and Tactical Control (360) by the Remote Control Workstation (RCW) or the Ground Control Station (GCS) (301).

Three types of controls deployed for the navigation module (100) are
1. Manual Control (310)
2. Mission Planning (330)
3. Tactical Control (360)

Manual control (310) implies direct human control including throttle and steering control, either by being physically present in the tactical platform of vehicle (302) particularly when the vehicle is road worthy vehicle or an airplane or a human carrying drone or a ship or a marine or a submarine; or remotely. Here, the complete operation responsibility is of the human operator (305). The human operator (305) needs to take care of each and every single parameter or setting or state or decision or tactical decision of the system.

In the mission planning (330) type of control, before operation initialization, complete planning is executed by initial commands. This planning includes how the vehicle should perform, in which scenario how it must behave, and all if-else this that or if commands and controlling factors are preplanned and fed to the RCW system. Once fed, after initialization the vehicle/command control performs functions as configured and RCW would not bypass the planned operations. Mission Planning (330) is the formal definition of any type of unmanned platform or system or vehicle where complete mission or planning or path planning and complete mission preparation and execution is done. Mission Planning (330) and real-time data monitoring/controlling/management is completely integrated into the system or platform. It helps to manage the complete path/plan/mission of the system/platform/vehicle. Data from multiple sensors is taken and graphed or shown or processes or used to generate user interface to perform the multiple jobs like control/monitor/eject/disturb/explode with the help of system/vehicle/platform.

Tactical Control (360) - Tactical control includes wider guidance navigation and controlling system including handshaking with mission planning (330) for decision-making in critical scenarios including scenarios like obstacle avoidance and reactive guidance, including multiple inputs and outputs. Wider guidance navigation contains hardware-software co-related system which determines the desired path of travel called as trajectory from the platform or vehicle's current location to a designated target location. It maps the system with actual trajectory with desired trajectory. The difference is calculated and offset is fed to the system for learning, which helps system to progressively better match the actual trajectory with the desired trajectory.

Generally, divided into two lateral dimensions:
- Pitch or pitch angle (88)
- Yaw or yaw angle (87), and
- Roll or roll angle (86);

Figure 21, a movement of aileron (86a) controls the roll (86), a movement of rudder (87a) controls the yaw (87) while a movement of the elevator (88a) controls the pitch (88) of any aviation vehicle. These three channel control outputs are mixed to produce fin commands from angular rate to acceleration feedback. The control strategy is either a proportional-integral (PI) or proportional integral derivative (PID) controller.

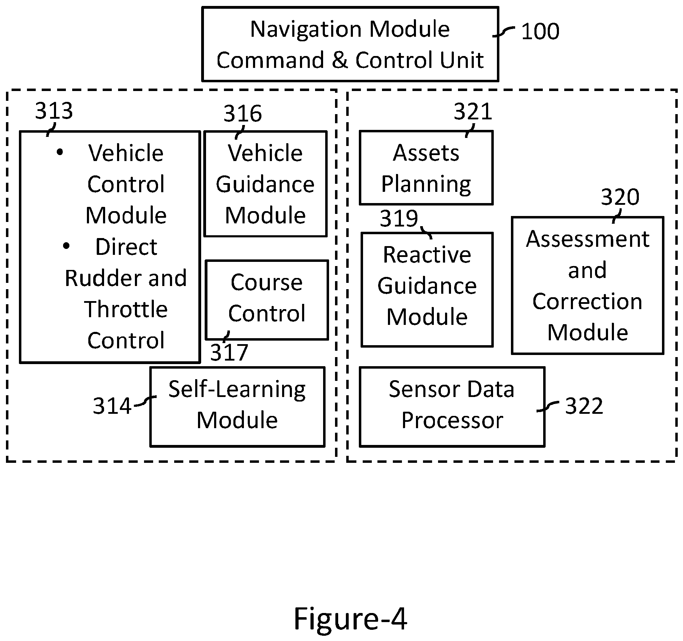

Command Control Unit or CCU (311) - Manual Control (310) works with Command Control Unit (311). Command Control Unit (CCU) comprises Self Learning Command Control Unit (314), Unmanned Control (320) and Assessment & Correction platform (320). Manual Control controls the rudder and throttle of the engine directly without autonomous operation. The vehicle control gives the signal to VDC (Vehicle Direct Control) which manages all the controlling of the vehicle. Here, mixed signal type controlling operators where Command Control Unit processes the data, and it is carried forward to Vehicle Direct Control. Figure 4.

Self-Learning Command Control Unit (314) consists of the following sub-systems:
- Vehicle Guidance (316)
- Course Control (317)

Vehicle Guidance system (316) is part of the control structure of the vehicle and consists of a path generator, a motion planning algorithm, and a sensor fusion module. A stereo vision sensor and a GFPS sensor are used as position sensors. The trajectory for the vehicle motion is generated in the first step by using only information from a digital map. Object-detecting sensors such as the stereo vision sensor, three laser scanners, and a radar sensor observe the vehicle environment and report detected objects to the sensor fusion module. This information is used to dynamically update the planned vehicle trajectory to the final vehicle motion. This helps the vehicle guidance system (316) to track correction and complete navigation guidance.

Course control system (317) derives a model for vehicle path-following and course controlling with the management of throttle and heading; wherein the pitch and yaw angles together with the surge velocity can be treated as control inputs.

Unmanned Control (320) primarily relies on a plurality of perception sensors (318) whose data is processed, assessed for precision and provides reactive guidance (319) to mission planning (330).

### Asset Planning (321):

With respect to autonomous maritime platforms, tactical platforms enable to exercise various mission sets such as sea denial, escort, survey, logistics, targeted counter abilities, etc.

As such, such a platform will conduct assets planning by:
- Mission Objectives: The tactical platform starts by defining the mission objectives based on the requirements or tasks to be accomplished. These objectives can include patrolling a specific area, conducting search and rescue operations, monitoring maritime traffic, or any other mission-specific goals.
- Data Collection and Analysis: The platform collects relevant data from various sources to gain situational awareness. This data can include real-time information on weather conditions, vessel traffic, sensor readings, geographical features, and mission constraints. The platform analyzes this data to understand the current operational environment and identify potential risks or opportunities.
- Asset Availability and Capabilities: The platform assesses the availability and capabilities of the assets at its disposal. This includes considering the types of autonomous sea-going vessels, their sensor suites, communication systems, endurance, speed, and any other relevant characteristics. The platform also takes into account the operational constraints and limitations of each asset.

- Optimization Algorithms: The tactical platform utilizes optimization algorithms to determine the most effective deployment and utilization of assets. These algorithms consider factors such as asset capabilities, mission objectives, constraints, and operational parameters to generate optimized plans. The plans may include routes, schedules, task assignments, and coordination strategies.
- Resource Allocation: Based on the optimized plans, the tactical platform assigns tasks and allocates resources to the autonomous sea-going vessels. It ensures that the assets are efficiently distributed to maximize coverage, minimize response times, and optimize the overall mission performance. This may involve considering factors such as asset proximity to target areas, their current status, and their suitability for specific tasks.
- Dynamic Adaptation: The tactical platform continuously monitors the operational environment and adapts the assets planning as needed. It can dynamically adjust plans in response to changing conditions, emerging threats, or new mission requirements. This adaptability allows the platform to optimize the allocation of assets in real-time and make informed decisions based on the latest information.
- Communication and Coordination: The tactical platform facilitates communication and coordination among the autonomous sea-going vessels and other entities involved in the mission. It establishes communication links, provides real-time updates, and enables collaboration between the assets. This ensures that the assets are synchronized, share relevant information, and work together to achieve the mission objectives effectively.

By combining data analysis, optimization algorithms, and adaptive planning strategies, an autonomous maritime tactical platform can efficiently conduct assets planning for autonomous sea-going vessels. It optimizes the utilization of assets, enhances mission performance, and enables effective decision-making in dynamic maritime environments.

### Assessment and Correction Platform (320):

Based on its perception and awareness of the environment, the given tasks/objectives, the onboard payloads, the platform continuously assesses the objectives, the effects achieved, and whether or not corrections are needed in its execution. Thereafter corrective measures are implemented and action taken to ensure that the tactical platform fulfills its objectives.

The plurality of perception sensors (318) connected to the reactive guidance system (319) include:
- Accelerometer
- Gyroscope
- Compass
- Magnetic Heading Sensor
- Barometric Sensor
- Multiple GNSS
- Vision Sensor including camera, stereo camera, Omni camera, IR camera
- Ultra-sonic sensor
- Laser Range finder
- Li-Dar, Sonar, Radar
- Optical sensor
- GNSS sensor
- Depth sensor

Such type of sensor data using sensor fusion algorithms gives appropriate data. It is referred to as a computational methodology that aims at combining measurement from multiple sensors such that they jointly give more precise information on the measured system than any of the sensors alone.

The data from such sensor and data from human operator or third-party user or device helps to perform the critical tasks at Remote Control Workstation (RCW) with human operator in-loop. This data is used to course controlling of the platform or vehicle (302). Course control includes multiple movements of the platform or vehicle (302). Movement like roll, pitch, yaw, right, left, port, starboard, altitude gain, altitude decrease, thrust, throttle, gear shift, etc. are done by it.

With that those data from sensors are used to get feedback from the system in close control loop instead of open loop to monitor control and accept the data from system. As well as current system is platform agnostic which makes it able to work with closed loop as well as open loop system. In open loop system, the data is managed by perception/fusion sensor data management and the decision/control/monitoring/management is completed at Remote Control Workstation (RCW).

The self-learning command control unit (314) comprises multiple FRAM and NVRAM memory storage which store the main control code which resides in the directory of the boot controller.

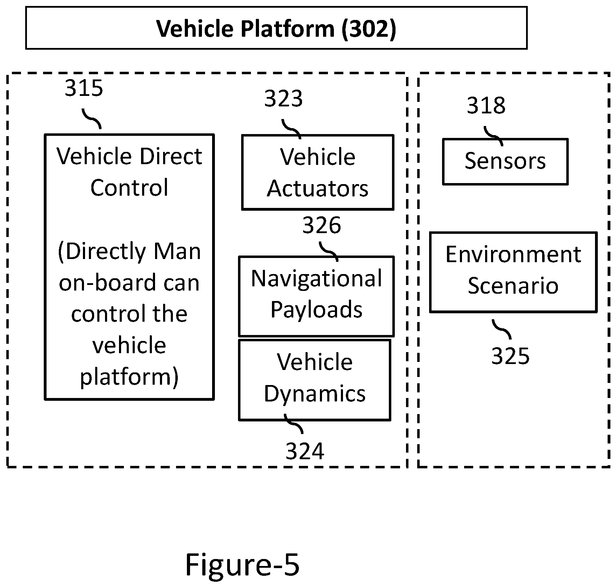

Figure 5, the vehicle (302) or the tactical platform (302A) has a vehicle direct control (315) including vehicle actuators (323) maneuverable under manual control (310). Vehicle dynamics (324) including speed, inclination etc. impacted by type of vehicle, weight, acceleration capabilities, night vision, turning radii, etc. and such navigational payloads (326) and, at the same time impacted by environmental scenario/constraints (325) including terrain parameters which are applied to outputs of sensors (318) to give a feedback to Mission Planning (330).

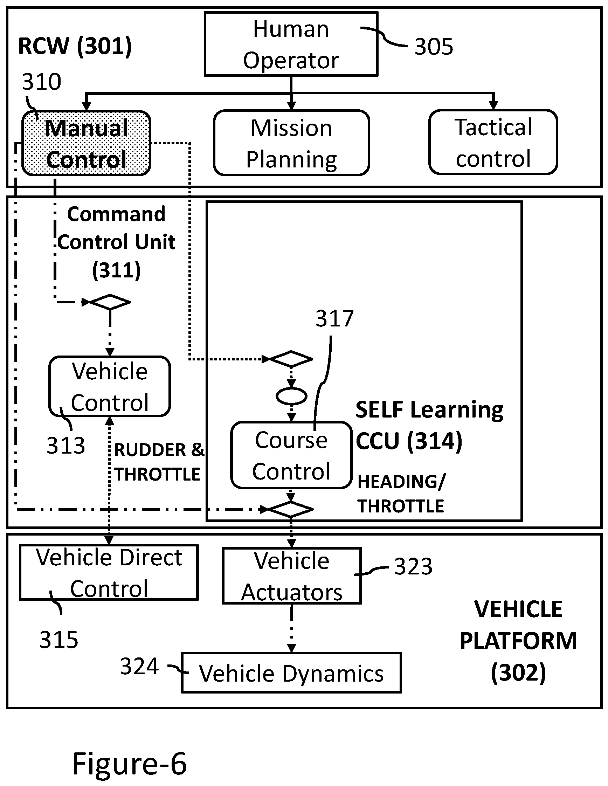

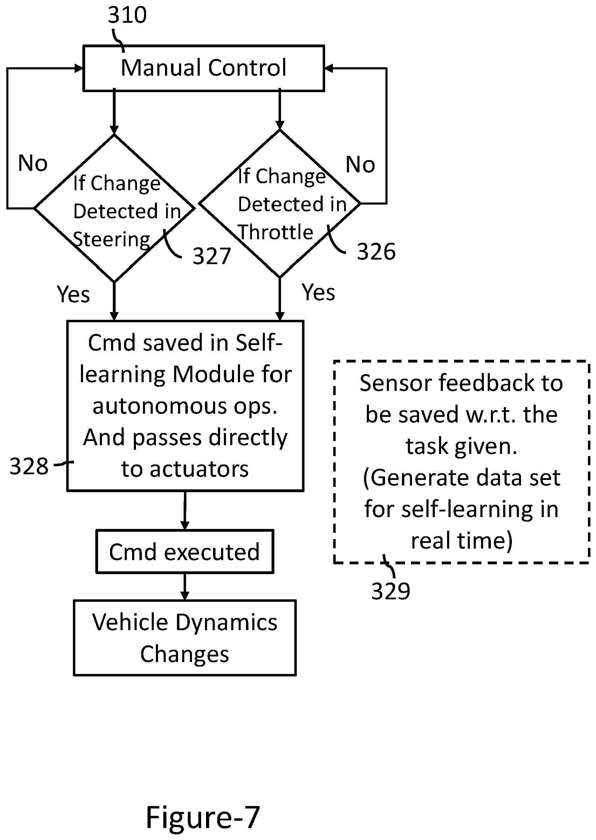

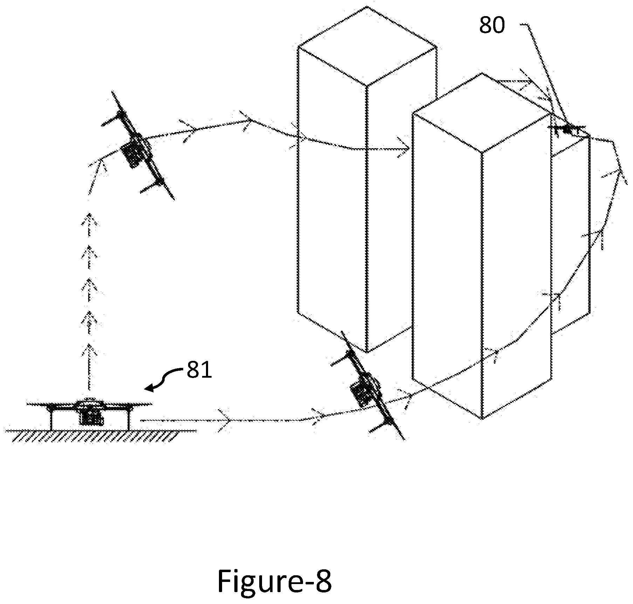

Figure 6, 7, in the Manual Control mode (310), any command given by the human operator causing a change detected in throttle (326) or a change in steering (327) is saved in the self-learning module (328) for subsequent autonomous operations. Importantly, although the perception sensors are not actively involved in navigational support in Manual Control (310), however, the perception sensors continue to generate dataset for self-learning in real time (329). Illustratively, Figure 8, even if the vehicle (302) is manually controlled, the perception sensors non-exhaustively collect information about path, surroundings including buildings (151) and distance between them (152), terrain, drift, atmospheric pressure and build training dataset for use in Mission Planning (330) and Tactical Control (360) situations.

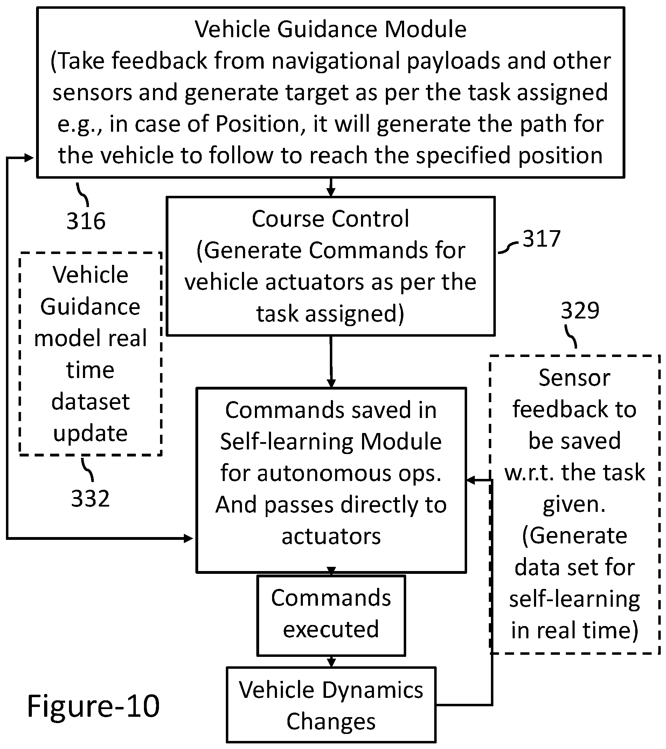

Figure 9, 10, in the Mission Planning mode (330) which is a semi-autonomous mode, the vehicle guidance module (316) generates a path for the vehicle (302) towards completing an assigned task to reach the prescribed destination with respect to a home position, by taking feedback from navigational payloads (326) and perception sensors (318). The course control module (317) generates commands for vehicle actuators (323) for the assigned task. The perception sensors (318) continue to generate dataset for self-learning in real time (329) with respect to the assigned task, while vehicle guidance model updates dataset in real time (332).

Figure 9, 11A-11B, in the Mission Planning mode (330) with auto maneuvering with situational awareness and tactical control with deliberative collision avoidance, the tactical platform (302A) is equipped with payloads/smart alarms (361). The vehicle guidance module (316) generates a path for the vehicle (302) towards completing an assigned task to reach the prescribed destination with respect to a home position, by taking feedback from navigational payloads (326) and perception sensors (318). The course control module (317) generates commands for vehicle actuators (323) for the assigned task. The navigation system (100) deploys deliberative payloads like aeronautical information services or AIS (362), the environmental scenario/constraints (325) and assessment & Correction module (320) for a precision navigation. The navigation system (100) gets the collision related data from the prior information like map data including tree, mountain, building information and terrain information. The perception sensors (318) continue to generate dataset for self-learning in real time (329) with respect to the assigned task, while vehicle guidance model updates dataset in real time (332).

Figure 9, 12, in the Mission Planning mode (330) with auto maneuvering with situational awareness and tactical control with responsive collision avoidance, the vehicle guidance module (316) generates a path for the vehicle (302) towards completing an assigned task to reach the prescribed destination with respect to a home position, by taking feedback from navigational payloads (326) and perception sensors (318). The course control module (317) generates commands for vehicle actuators (323) for the assigned task. The navigation system (300) deploys deliberative payloads like AIS (362), the environmental scenario/constraints (325) and assessment & Correction module (320) for a precision navigation. The navigation system (300) uses data from cameras, LIDAR, SONAR, ADSB, besides aeronautical information services (AIS) that provide real time data on which the reactive guidance (319) makes course control (through assessment and correction module (320) for collision avoidance. The perception sensors (318) continue to generate dataset for self-learning in real time (329) with respect to the assigned task, while vehicle guidance model updates dataset in real time (332).

Figure 9,13, the vehicle (302) having assigned a known destination (80) with respect to a home position (81) calculates its path, which could be more than one. A safe height prediction (370) and a path prediction (371) is with prescribed preferences and limits based on a cognitive algorithm on a previously trained model from earlier real time dataset. In the event any object is detected enroute, the vehicle (302) re-routes the path (379) in a prescribed order. The flight may be with a responsive collision avoidance technique or a deliberative collision avoidance technique.

Importantly, all above embodiments are with availability of a communication network (390) including an internet communication or a satellite communication. The present invention is equally capable in absence of any or all kinds of communication network (390). Figure 1, the vehicle (302) is assigned a task of reaching an unknown destination (82) which is a drowning human (82a) needing help. The unknown destination (82) is hidden behind a big obstruction (85), which is a ship. In this scenario, navigation is done on the basis of a localized frame of reference, in the form of an imaginary cuboid (90) of situationally prescribed X, Y and Z dimensions created by a deep learning grid algorithm. Figure 14. The cuboid (90) comprises a precision three-dimensional grid creating a plurality of nodes (91) by intersections of X, Y and or Z co-ordinates. The vehicle (302), while moving in the cuboid (90) knows its precise position by the corresponding node(s) (91). The X, Y and Z dimensions are situationally prescribed based on a judgement such that the home position (81), the unknown destination (82) and the obstruction (85) are well within the cuboid (90). The vehicle moves within the cuboid (90) and knows its own relative position with respect to the home position (81) with the help of compass, gyroscope, accelerometer, sonic sensors, cameras and other non-network devices and perception sensors (318). Figure 1, 15, 16, the vehicle (302), here a drone, predicts a safe height (373) based on task type, weather condition and location information (372) inputted manually. Such information is relay to the self-learning module (383) of the navigation module (100). Based on previous operations' learning Safe height/cursing speed and sensor gains adjusted by the drone itself, the drone completes the task autonomously (384).

The grid is a deep learning algorithm based which configures grid of coarser or finer pitch based on a prescribed task. Illustratively, to locate a human, the grid would be of a pitch of a feet, while the grid would be of far longer pitch when the destination is a ship or a building.

Search direction (380) - The home position (81) is in the center (375) of the cuboid (90) when search direction is unascertained, or the home position is a corner (374) of the cuboid (90) if the search direction is ascertained. Figure 17. The home position (81) is on a top edge (376) of the cuboid (90) when the vehicle (302) is a marine vehicle, Figure 18.

As a variation, the imaginary cuboid (90) is an electromagnetic field, or any other energy field locally generated by the vehicle (302) or the tactical platform (302A) around itself. The imaginary cuboid (90) thus effectively navigates the vehicle (302) or the tactical platform (302A) particularly with the aid of the sensor fusion algorithm based self-learning module (314) prudently ensuring precision and redundancy. As earlier mentioned, the sensor fusion algorithm is a computational methodology deployed to analyze and compare relatable sensor data for mismatch and use a "fused" data for training the AI model (377) instead of merely using the captured data.

Relatable data illustratively implies comparing a linear measure from more than one sensor directly or indirectly. Thus, a plurality of orthogonal linear measure would be applied with geometrical rules to compute a non-orthogonal measure.

It is known that stand-alone electromechanical non-network based sensors are generally less accurate and the vehicle (302) takes a regular feedback from the previously trained cognitive navigation algorithm-based AI model (377). Figure 19, the navigation switches between network based navigation (391) to grid based navigation (392) with an intermittent communication network availability, in order to continuously course correct a trajectory till the assigned task is accomplished.

Algorithms and computer programs present in multiple layers are present in the working of the self-learning command control unit (314), notably:
- User Interface
- Intra-Communication Layer
- Multiple Vehicle Libraries
- Here those libraries decide the behavior of the control system as per the vehicle which can be Ground Vehicle, UAV, USV, AUV, etc.
- Vehicle Specific Code
- Control and Thread Management Layer
- Hardware
- Sensory System or Payload
- Sensors
- Payload Control
- Sandbox Layer for control

### User Interface:

User Interface is the interaction medium of human operator to the system. All the control and monitoring parameters and control analogy is available on the User Interface of the system.

### Intra-communication Layer:

Intra-communication layer is the layer where communication between a computing system and multiple payloads like sensory system, Input Channel, Output Channels is gets managed. The most important part of this layer is to make sure that if one channel of communication medium is getting affected then in that case to manage and initiate the communication using another communication channel including switching navigation from one communication network (390) to another communication network (390). Thus, all monitoring and controlling is done through this layer.

### Multiple Vehicle Libraries:

All the threading related multiple vehicle operation control is managed by these libraries. These libraries enable hardware able to understand type of vehicle a specific hardware and corresponding software is going to control. For example, if car is going to be controlled from a specific hardware in that case the control and Thread Management layer will use the car type of vehicle libraries from the set of data, so that software and hardware can understand that which types of commands will be required for that specific vehicle.

### Control and Thread Management Layer:

This layer enables the processor to control the clock and timing of the complete system so that the multiple threading/multiple processes can work synchronously.

### Hardware:

In this layer hardware is assigned. For example, initialization of software drivers, DLLs required for specific hardware peripherals so that compatibility issue can be resolved.

### Sensory system and Payload:

The payload and navigation sensors like accelerometers, vision system, compass/heading sensor, gyroscope, camera system, etc. are assigned in this system.

### Sand Box Layer for control and testing:

It is isolated testing environment that enables users to run and decides the program for which the controlling can be done without affecting the application and system or platform that we run.

Figure 23, 24, the navigation module (100) consists of following core hardware components:
- Controlling Unit (110)
- Feedback Unit (120)
- Controlling Processor (130)
- Self-Learning Processor (140) - The self-learning processor (140) receives the dataset for training and comprises a model with cognitive navigation algorithms including subroutines as per embodiment
- Sensor System (150) - The sensor system (150) receives inputs from the perception sensors (318) and converts all inputs suitable for PID controlling of vehicle actuators (323)
- Power Distribution unit including filters and isolation (160)
- Power Supply Management (170)
- Communication Module (180)

The navigation system (300) deploying the navigation module (100) with the aid of a plurality of perception sensors (318) controls the tactical platform or (302) with micro-management, wherein all operator instructions and commands including audio, manual, electrical, radio commands are captured by a navigation algorithm with deep learning based Command & Control Unit.

All previously recorded position and relative time information is retrieved and compared against position and relative time information occurring during automatic maneuver. The difference between the previously recorded information and the actual information is used to generate error signals which are converted to command signals as well as to learn/self-learn. Figure 22, the essence of the present invention is a closeness between a predicted trajectory (381) and an actual trajectory (382), as an outcome of continuous real time learning, sending training dataset to model execution navigational algorithm. Self-Learning command and control system as per the present invention works closelywith a human operator by utilizing levels of "managed autonomy". This allows the operator to focus on the work at hand rather than directly navigating the vehicle. The technological advantage includes the hybrid technology with smart algorithm hardware for both manned & unmanned operations. This can be configured to suit the particular vehicle & is not restricted to vehicle type. The technology is equally suited to controlling torpedo shaped vehicles & also high-speed vehicles. It uses self- tuning algorithms, which it learns from the vehicle responses & adapts itself to it. It can be used as a simple autopilot to a high end stand-alone unmanned system. The technology is utilized in survey, security & military applications. The self-learning command and control system is modular and application adaptive, therefore aptly named navigation module (100) & thus can be retro-fitted easily onto any vehicle irrespective of its type, size, shape, application & propulsion. Figure 24 is an image of a navigation module (100) in deployment. A rugged, vibration resistant, moisture and ingress proof enclosure (101) houses robust electronics.

## Claims

1. A navigation system (300) for a land, air, marine or submarine vehicle (302), the vehicle (302) comprising a plurality of vehicle actuators (323), the navigation system comprising:
- a remote control workstation (301),
- a navigation module (100) comprising a command Control unit (311) and
- a plurality of perception sensors (318) disposed on the vehicle (302),
wherein the navigation module (100) is configured to receive sensor data from the plurality of perception sensors (318) and to generate control commands for the vehicle actuators (323),
**characterized in that:**
the command control unit (311) comprises a self-learning command control module (314);
the remote control workstation (301) is configured to operate selectively in:
- a manual control mode (310),
- a mission planning mode (330), and
- a tactical control mode (360);
wherein:
in the manual control mode (310), the vehicle actuators (323), including throttle and steering actuators, are directly controlled by a human operator (305) without autonomous navigation intervention, and commands issued by the human operator (305) are converted into a dataset for training a navigation model residing in the self-learning command control module (314);
in the mission planning mode (330), pre-planned mission commands are defined prior to operation initialization and executed by the navigation module (100);
in the tactical control mode (360), the remote control workstation (301) is configured to interact with the mission planning mode (330) and to generate reactive guidance commands,
wherein the tactical control mode (360) includes:
- comparison between an actual trajectory (382) of the vehicle (302) and a desired trajectory (381), and
- generation of a corrective offset based on the comparison,
the corrective offset being provided to the self-learning command control module (314) for updating the navigation model;
wherein the plurality of perception sensors (318) generate real-time sensor data used for training the navigation model in the manual control mode (310), the mission control mode (330) and the tactical control mode (360), and
in the absence of a communication network (390), the navigation module (100) performs navigation within a cuboid (90) defined by situationally prescribed X, Y and Z dimensions and comprising a three-dimensional grid of nodes (91),
wherein the vehicle (302) determines its relative position within the cuboid (90) using non-network-based perception sensors (318).

2. The navigation system (300) as claimed in claim 1, wherein the navigation module (100) further comprises:
∘ a Controlling Unit (110),
∘ a Feedback Unit (120),
∘ a Controlling Processor (130),
∘ a Self-Learning Processor (140),
∘ a Sensor System (150),
∘ a Power Distribution unit including filters and isolation (160),
∘ a Power Supply Management (170), and
∘ a Communication Module (180),
wherein the plurality of perception sensors (318) is connected to the sensor system (150) through a hard wiring or wirelessly through the communication module (180), the sensor system (150) being configured to receive inputs from the perception sensors (318) and to convert all inputs suitable for a proportional integral derivative (PID) controller (378) for a vehicle actuators (323), the self-learning processor (140) being configured to receive a training dataset for a cognitive navigation algorithm model.

3. The navigation system (300) as claimed in claim 1, wherein the Mission Planning mode (330) is configured to conduct auto maneuvering with situational awareness and tactical control with deliberative collision avoidance, the vehicle guidance module (316) is configured to generate a path for the vehicle (302) towards completing an assigned task to reach the prescribed destination with respect to a home position, the navigation system (300) is configured to get a collision related data from a prior information set of map data including tree, mountain, building information and terrain information, the perception sensors (318) continue to generate dataset for self-learning in real time (329) with respect to the assigned task, while vehicle guidance model updates dataset in real time (332).

4. The navigation system (300) as claimed in claim 1, wherein the Mission Planning mode (330) is configured to conduct auto maneuvering with situational awareness and tactical control with responsive collision avoidance, the vehicle guidance module (316) is configured to generate a path for the vehicle (302) towards completing an assigned task to reach the prescribed destination with respect to a home position, the course control module (317) is configured to generate commands for vehicle actuators (323) for the assigned task, the navigation system (300) is configured to use data from cameras, LIDAR, SONAR, ADSB, besides aeronautical information services, that provide real time data on which the reactive guidance (319) and to make course control through assessment and correction module (320) for collision avoidance, the perception sensors (318) continue to generate dataset for self-learning in real time (329) with respect to the assigned task, while vehicle guidance model updates dataset in real time (332).

5. The navigation system (300) as claimed in claim 1, wherein the Command Control Unit or CCU (311) comprises a Self-Learning Command Control Unit (314), Unmanned Control (320) and Assessment & Correction platform (320), the Self-Learning Command Control Unit (314) consists of:
A Vehicle Guidance system (316), wherein Vehicle Guidance system (316) has a path generator, a motion planning algorithm, and a sensor fusion module, a stereo vision sensor and a GFPS sensor are used as position sensors, a trajectory for the vehicle motion is generated in the first step by using only information from a digital map while object-detecting sensors such as the stereo vision sensor, three laser scanners, and a radar sensor being configured to observe the vehicle environment and to report detected objects to the sensor fusion module, dynamically updating the planned vehicle trajectory to the final vehicle motion to track correction and complete navigation guidance, and
Course Control (317), wherein the Course control system (317) is configured to derive a model for vehicle path-following and course controlling with the management of throttle and heading; wherein a pitch angle (88), a roll angle (86), a yaw angle (87), and a surge velocity are inputs.

6. The navigation system (300) as claimed in claim 1, wherein the plurality of perception sensors (318) connected to the reactive guidance system (319) include Accelerometer, Gyroscope, Compass, Magnetic Heading Sensor, Barometric Sensor, Multiple GNSS, Vision Sensors, sonic sensor, Laser Range finder, Li-Dar, Sonar, Radar, Optical sensor, depth sensor, and wherein a sensor data is fused using a plurality of sensor fusion algorithms.

7. The navigation system (300) as claimed in claim 1, wherein the vehicle (302) having assigned a known destination (80) with respect to a home position (81) is configured to generate a plurality of path prediction (371) with prescribed preferences and limits based on a cognitive navigation algorithm on a previously trained navigation model from earlier real time dataset.

8. The navigation system (300) as claimed in claim 1, wherein the navigation module (100) of the vehicle (302), here a drone, is configured to predict a safe height (373) based on task type, weather condition and Location information (372) inputted manually.

9. The navigation system (300) as claimed in claim 8, wherein the vehicle guidance system (316) of the vehicle (302) is configured to take a regular feedback from a previously trained cognitive navigation algorithm based AI navigation model (377).

10. The navigation system (300) as claimed in claim 8, wherein the navigation is configured to switch between a network based navigation (391) to a grid based navigation (392) with intermittent network availability, in order to continuously course correct a trajectory.

11. The navigation system (300) as claimed in claim 1, wherein the navigation module (100) is retrofittably disposed on the vehicle (302).

## Patentansprüche

1. Navigationssystem (300) für ein Land-, Luft-, See- oder Unterwasserfahrzeug (302), wobei das Fahrzeug (302) mehrere Fahrzeugaktuatoren (323) umfasst, indem das Navigationssystem Folgendes umfasst:
- eine Fernsteuerarbeitsstation (301),
- ein Navigationsmodul (100) mit einer Kommando- und Steuereinheit (311) und
- mehreren am Fahrzeug (302) angeordneten Wahrnehmungssensoren (318),
wobei das Navigationsmodul (100) so konfiguriert ist, dass es Sensordaten von den Wahrnehmungssensoren (318) empfängt und Steuerbefehle für die Fahrzeugaktuatoren (323) generiert.
**dadurch gekennzeichnet, dass**:
die Kommando- und Steuereinheit (311) ein selbstlernendes Kommando- Steuerungsmodul (314) umfasst;
die Fernsteuerarbeitsstation (301) so konfiguriert ist, dass sie wahlweise in folgenden Modi betrieben werden kann:
- manueller Steuerungsmodus (310),
- Missionsplanungsmodus (330) und
- taktischer Steuerungsmodus (360),
wobei:
im manuellen Steuerungsmodus (310) die Fahrzeugaktuatoren (323), einschließlich Gas (Drosselklappen)- und Lenkaktuatoren, direkt von einem menschlichen Bediener (305) ohne autonomes Navigationsintervention gesteuert werden und die vom menschlichen Bediener (305) erteilten Befehle in einen Datensatz für das Training eines Navigationsmodells im selbstlernenden Kommando- Steuerungsmodul (314) umgewandelt werden;
im Missionsplanungsmodus (330) vorgeplante Missionsbefehle vor der Initialisierung des Betriebs definiert werden und vom Navigationsmodul (100) ausgeführt werden;
im taktischen Steuerungsmodus (360) die Fernsteuerarbeitsstation (301) so konfiguriert ist, dass sie mit dem Missionsplanungsmodus (330) interagiert und reaktive Lenkbefehle generiert,
wobei der taktische Steuerungsmodus (360) Folgendes umfasst:
- einen Vergleich zwischen der tatsächlichen Trajektorie (382) des Fahrzeugs (302) und der gewünschten Trajektorie (381) sowie
- eine Generierung eines Korrekturversatzes basierend auf diesem Vergleich,
wobei der Korrekturversatz dem selbstlernenden Kommando- und Steuerungsmodul (314) zur Aktualisierung des Navigationsmodells bereitgestellt wird,
wobei
die Vielzahl der Wahrnehmungssensoren (318) Echtzeit-Sensordaten generiert, die zum Trainieren des Navigationsmodells im manuellen Steuerungsmodus (310), im Missionssteuerungsmodus (330) und im taktischen Steuerungsmodus (360) verwendet werden, und
das Navigationsmodul (100) in Abwesenheit eines Kommunikationsnetzwerks (390) innerhalb eines Quaders (90) die Navigation durchführt, der durch situationsbedingte X-, Y- und Z-Abmessungen definiert ist und ein dreidimensionales Gitter von Knoten (91) umfasst,
wobei das Fahrzeug (302) seine relative Position innerhalb des Quaders (90) mithilfe netzwerkunabhängiger Wahrnehmungssensoren (318) bestimmt.

2. Navigationssystem (300) nach Anspruch 1, wobei das Navigationsmodul (100) weiterhin Folgendes umfasst:
- eine Steuereinheit (110),
- eine Rückkopplungseinheit (120),
- einen Steuerungsprozessor (130),
- einen selbstlernenden Prozessor (140),
- ein Sensorsystem (150),
- eine Stromverteilungseinheit einschließlich Filtern und Isolation (160),
- ein Stromversorgungsmanagement (170) und
- ein Kommunikationsmodul (180),
wobei die Vielzahl der Wahrnehmungssensoren (318) über eine feste Verdrahtung oder drahtlos über das Kommunikationsmodul (180) mit dem Sensorsystem (150) verbunden ist, indem das Sensorsystem (150) so konfiguriert ist, dass es Eingangssignalen von den Wahrnehmungssensoren (318) empfängt und alle für einen PID (Proportional Integral Derivative) -Regler (378) von der Fahrzeugaktuatoren (323) geeignete Eingangssignalen umwandelt, wobei der selbstlernende Prozessor (140) so konfiguriert ist, dass er einen Trainingsdatensatz für ein kognitives Navigationsalgorithmusmodell empfängt.

3. Navigationssystem (300) nach Anspruch 1, wobei der Missionsplanungsmodus (330) für die Durchführung von automatischen Manöver mit Situationsbewusstsein und taktischer Steuerung mit vorausschauender Kollisionsvermeidung konfiguriert ist, indem das Fahrzeugführungsmodul (316) so konfiguriert ist, dass es einen Pfad für das Fahrzeug (302) zur Erfüllung einer zugewiesenen Aufgabe um das relativ zu einer Ausgangsposition vorgegebene Ziel zu erreichen generiert, wobei das Navigationssystem (300) so konfiguriert ist, das sie kollisionsbezogene Daten aus einem vorab bereitgestellten Kartendatensatz einschließlich Baum-, Berg-, Gebäude- und Geländeinformationen abruft, indem die Wahrnehmungssensoren (318) kontinuierlich Datensätze für das Selbstlernen in Echtzeit (329) in Bezug auf die zugewiesene Aufgabe generieren, während das Fahrzeugführungsmodell die Datensätze in Echtzeit aktualisiert (332).

4. Navigationssystem (300) nach Anspruch 1, wobei der Missionsplanungsmodus (330) für die Durchführung von automatischen Manövern mit Situationsbewusstsein und taktischer Steuerung mit reaktionsschneller Kollisionsvermeidung konfiguriert ist, indem das Fahrzeugführungsmodul (316) so konfiguriert ist, dass es einen Pfad für das Fahrzeug (302) zur Erfüllung einer zugewiesenen Aufgabe um das relativ zu einer Ausgangsposition vorgegebene Ziel zu erreichen generiert, wobei das Kurssteuerungsmodul (317) so konfiguriert ist, dass es Befehle für die Fahrzeugaktuatoren (323) für die zugewiesene Aufgabe generiert, indem das Navigationssystem (300) so konfiguriert ist, dass sie Daten von Kameras, LIDAR, SONAR, ADS-B sowie von Luftfahrtinformationsdiensten nutzt, die Echtzeitdaten liefern, auf deren Grundlage die reaktive Führung (319) und die Kurskontrolle durch ein Bewertungs- und Korrekturmodul (320) zur Kollisionsvermeidung erfolgen, indem die Wahrnehmungssensoren (318) kontinuierlich Datensätze für das Selbstlernen in Echtzeit (329) in Bezug auf die zugewiesene Aufgabe generieren, während das Fahrzeugführungsmodell die Datensätze in Echtzeit aktualisiert (332).

5. Navigationssystem (300) nach Anspruch 1, wobei die Kommando- und Steuereinheit (CCU Command Control Unit) (311) eine selbstlernende Kommando- und Steuerungseinheit (314), eine unbemannte Steuerung (320) und eine Bewertungs- und Korrekturplattform (320) umfasst, indem die selbstlernende Kommando- und Steuerungseinheit (314) aus Folgendes besteht:
eine Fahrzeugführungssystem (316), das einen Pfadgenerator, einen Bewegungsplanungsalgorithmus und ein Sensorfusionsmodul aufweist, indem als Positionssensoren ein Stereovisionssensor und ein GFPS-Sensor verwendet sind, wobei im ersten Schritt eine Trajektorie für die Fahrzeugbewegung ausschließlich anhand von Informationen einer digitalen Karte generiert ist, wobei Objekterkennungssensoren wie der Stereovisionssensor, drei Laserscanner und ein Radarsensor so konfiguriert sind, dass sie die Fahrzeugumgebung beobachten und erkannte Objekte an das Sensorfusionsmodul melden, wodurch die geplante Fahrzeugtrajektorie dynamisch auf die endgültige Fahrzeugbewegung aktualisiert wird, um Kurskorrekturen vorzunehmen und die Navigationsführung abzuschließen, und eine Kurssteuerung (317), wobei das Kurssteuerungssystem (317) so konfiguriert ist, dass es ein Modell für die Pfadverfolgung und Kurssteuerung des Fahrzeugs unter Berücksichtigung von Gaspedalstellung und Fahrtrichtung ableitet; wobei ein Nickwinkel (88), ein Rollwinkel (86), ein Gierwinkel (87) und eine Längsgeschwindigkeit als Eingangsgrößen dienen.

6. Navigationssystem (300) nach Anspruch 1, wobei die Vielzahl der mit dem reaktiven Führungssystem (319) verbundenen Wahrnehmungssensoren (318) Beschleunigungsmesser, Gyroskop, Kompass, Magnetkurssensor, Barometer, mehrere GNSS-Systeme, Bildsensoren, Schallsensor, Laserentfernungsmesser, Li-DAR, Sonar, Radar, optischen Sensor und Tiefensensor umfasst und wobei die Sensordaten mittels mehrerer Sensorfusionsalgorithmen fusioniert werden.

7. Navigationssystem (300) nach Anspruch 1, wobei das Fahrzeug (302), dem ein bekanntes Ziel (80) relativ zu einer Ausgangsposition (81) zugewiesen wurde, so konfiguriert ist, dass es auf Basis eines kognitiven Navigationsalgorithmus eines zuvor trainierten Navigationsmodells anhand früherer Echtzeitdatensatz mehrere Pfadvorhersagen (371) mit vorgegebenen Präferenzen und Grenzen generiert.

8. Navigationssystem (300) nach Anspruch 1, wobei das Navigationsmodul (100) des Fahrzeugs (302), hier einer Drohne, so konfiguriert ist, dass es auf Basis der Aufgabenart, der Wetterbedingungen und manuell eingegebener Standortinformationen (372) eine sichere Höhe (373) vorhersagt.

9. Navigationssystem (300) nach Anspruch 8, wobei das Fahrzeugführungssystem (316) des Fahrzeugs (302) so konfiguriert ist, dass es regelmäßig Rückkopplung von einem zuvor trainierten kognitiven Navigationsalgorithmus auf Basis eines KI (Künstliche Intelligenz)-Navigationsmodells (377) erhält.

10. Navigationssystem (300) nach Anspruch 8, wobei die Navigation so konfiguriert ist, dass sie zwischen einer netzwerkbasierten Navigation (391) und einer gitterbasierten Navigation (392) mit periodischer Netzwerkverfügbarkeit umschaltet, um die Fahrstrecke kontinuierlich zu korrigieren.

11. Navigationssystem (300) nach Anspruch 1, wobei das Navigationsmodul (100) nachrüstbar im Fahrzeug (302) angeordnet ist.

## Revendications

1. Un système de navigation (300) pour un véhicule terrestre, aérien, maritime ou sous-marin (302), ledit véhicule (302) comprenant plusieurs actionneurs (323), le système de navigation comprenant :
- un poste de commande à distance (301),
- un module de navigation (100) comprenant une unité de commande et de contrôle (311) et
- plusieurs capteurs de perception (318) disposés sur le véhicule (302).
dans lequel le module de navigation (100) est configuré pour recevoir des données de capteurs provenant de plusieurs capteurs de perception (318) et pour générer des commandes de contrôle pour les actionneurs du véhicule (323),
**caractérisé en ce que** :
l'unité de commande et de contrôle (311) comprend un module de commande et de contrôle à apprentissage non-supervisé (314) ;
le poste de commande à distance (301) est configuré pour fonctionner sélectivement dans :
- un mode de commande manuelle (310),
- un mode de planification de mission (330), et
- un mode de commande tactique (360) ;
où :
en mode de commande manuelle (310), les actionneurs du véhicule (323), y compris les actionneurs d'accélérateur et de direction, sont commandés directement par un opérateur humain (305) sans intervention de la navigation autonome, et les commandes émises par l'opérateur humain (305) sont converties en un ensemble de données pour l'apprentissage d'un modèle de navigation résidant dans le module de commande et de contrôle à apprentissage non-supervisé (314) ;
en mode de planification de mission (330), les commandes de mission pré-planifiées sont définies avant l'initialisation de l'opération et exécutées par le module de navigation (100);
en mode de contrôle tactique (360), le poste de commande à distance (301) est configuré pour interagir avec le mode de planification de mission (330) et générer des commandes de guidage réactives,
où le mode de contrôle tactique (360) comprend:
- la comparaison entre la trajectoire réelle (382) du véhicule (302) et la trajectoire souhaitée (381) et
- la génération d'une correction de trajectoire basée sur cette comparaison,
cette correction étant transmise au module de commande à apprentissage non-supervisé (314) pour la mise à jour du modèle de navigation;
et où
la pluralité de capteurs de perception (318) génère des données de capteurs en temps réel utilisées pour l'apprentissage du modèle de navigation en mode de contrôle manuel (310), en mode de contrôle de mission (330) et en mode de contrôle tactique (360), et
en l'absence de réseau de communication (390), le module de navigation (100) effectue la navigation à l'intérieur d'un cuboïde (90) défini par des dimensions X, Y et Z prescrites par la situation et comprenant une grille tridimensionnelle de nœuds (91),
dans lequel le véhicule (302) détermine sa position relative à l'intérieur du cuboïde (90) à l'aide de capteurs de perception non basés sur un réseau (318).

2. Le système de navigation (300) selon la revendication 1, dans lequel le module de navigation (100) comprend en outre :
° une unité de commande (110),
° une unité de retour d'information (120),
° un processeur de commande (130),
° un processeur d'apprentissage non-supervisé (140),
° un système de capteurs (150),
° une unité de distribution d'énergie comprenant des filtres et une isolation (160),
° un système de gestion de l'alimentation (170), et
° un module de communication (180),
dans lequel la pluralité de capteurs de perception (318) est connectée au système de capteurs (150) par câblage ou sans fil via le module de communication (180), le système de capteurs (150) étant configuré pour recevoir des entrées des capteurs de perception (318) et pour convertir toutes les entrées afin de les rendre compatibles avec un contrôleur proportionnel-intégral-dérivé (PID) (378) destiné aux actionneurs du véhicule (323), le processeur d'apprentissage non-supervisé (140) étant configuré pour recevoir un ensemble de données d'apprentissage pour le modèle d'algorithme de navigation cognitive.

3. Le système de navigation (300) selon la revendication 1, dans lequel le mode de planification de mission (330) est configuré pour effectuer des manœuvres automatiques avec sensation de la situation, et de contrôle tactique avec évitement délibéré des collisions, le module de guidage du véhicule (316) est configuré pour générer un chemin pour le véhicule (302) afin d'accomplir une tâche assignée pour atteindre la destination prescrite par rapport à une position de départ, le système de navigation (300) est configuré pour obtenir des données relatives aux collisions à partir d'un ensemble d'informations préalables de données cartographiques comprenant des informations sur les arbres, les montagnes, les bâtiments et le terrain, les capteurs de perception (318) continuant de générer un ensemble de données pour l'apprentissage non-supervisé en temps réel (329) par rapport à la tâche assignée, tandis que le modèle de guidage du véhicule met à jour l'ensemble de données en temps réel (332).

4. Le système de navigation (300) selon la revendication 1, dans lequel le mode de planification de mission (330) est configuré pour effectuer des manœuvres automatiques avec sensation de la situation et de contrôle tactique avec évitement réactif des collisions, le module de guidage du véhicule (316) est configuré pour générer une trajectoire pour le véhicule (302) afin d'accomplir une tâche assignée et d'atteindre la destination prescrite par rapport à une position de départ, le module de contrôle de cap (317) est configuré pour générer des commandes pour les actionneurs du véhicule (323) pour la tâche assignée, le système de navigation (300) est configuré pour utiliser les données des caméras, du LIDAR, du SONAR, de l'ADSB, ainsi que des services d'information aéronautique, qui fournissent des données en temps réel, sur lesquelles effectuer le guidage réactif (319) et le contrôle de cap via le module d'évaluation et de correction (320) pour l'évitement des collisions, les capteurs de perception (318) continuant de générer un ensemble de données pour l'apprentissage non-supervisé en temps réel (329) par rapport à la tâche assignée, tandis que le modèle de guidage du véhicule met à jour l'ensemble de données en temps réel (332).

5. Le système de navigation (300) selon la revendication 1, dans lequel l'unité de commande et de contrôle ou CCU (311) comprend une unité de commande et de contrôle à apprentissage non-supervisé (314), une plateforme de contrôle sans pilote (320) et une plateforme d'évaluation et de correction (320), l'unité de commande et de contrôle à apprentissage non-supervisé (314) étant composée de :
Un système de guidage du véhicule (316), où ce système de guidage du véhicule (316) comprend un générateur de trajectoire, un algorithme de planification de mouvement et un module de fusion de capteurs, un capteur de vision stéréoscopique et un capteur GFPS étant utilisés comme capteurs de position. Dans une première étape, une trajectoire est générée à partir des seules informations d'une carte numérique, tandis que des capteurs de détection d'objets, tels que le capteur de vision stéréoscopique, trois scanners laser et un radar, observent l'environnement du véhicule et signalent les objets détectés au module de fusion de capteurs, mettant à jour dynamiquement la trajectoire planifiée du véhicule pour corriger le déplacement final du véhicule et finaliser le guidage de navigation, et
Un système de contrôle de cap (317), ce système de contrôle de cap (317) étant configuré pour dériver un modèle de suivi de trajectoire et de contrôle de cap du véhicule avec la gestion de l'accélérateur et de la direction ; dans lequel un angle de tangage (88), un angle de roulis (86), un angle de déviation (87) et une vitesse de poussée sont des entrées.

6. Le système de navigation (300) selon la revendication 1, dans lequel la pluralité de capteurs de perception (318) connectés au système de guidage réactif (319) comprend un accéléromètre, un gyroscope, une boussole, un capteur de cap magnétique, un capteur barométrique, un GNSS multiple, des capteurs de vision, un capteur sonique, un télémètre laser, un Li-Dar, un sonar, un radar, un capteur optique, un capteur de profondeur, et dans lequel les données des capteurs sont fusionnées à l'aide d'une pluralité d'algorithmes de fusion de capteurs.

7. Le système de navigation (300) selon la revendication 1, dans lequel le véhicule (302), ayant assignée une destination connue (80) par rapport à une position de départ (81), est configuré pour générer plusieurs prédictions de trajectoire (371) avec des préférences et des limites prédéfinies, basées sur un algorithme de navigation cognitive et un modèle de navigation préalablement entraîné à partir d'un ensemble de données en temps réel.

8. Le système de navigation (300) selon la revendication 1, dans lequel le module de navigation (100) du véhicule (302), ici un drone, est configuré pour prédire une altitude de sécurité (373) en fonction du type de tâche, des conditions météorologiques et des informations de localisation (372) saisies manuellement.

9. Système de navigation (300) selon la revendication 8, dans lequel le système de guidage (316) du véhicule (302) est configuré pour recevoir un retour d'information régulier d'un modèle de navigation par intelligence artificielle (377) basé sur un algorithme de navigation cognitive préalablement entraîné.

10. Système de navigation (300) selon la revendication 8, dans lequel la navigation est configurée pour basculer entre une navigation basée sur réseau (391) et une navigation basée sur grille (392), en cas de disponibilité intermittente du réseau, afin de corriger en continu la trajectoire.

11. Système de navigation (300) selon la revendication 1, dans lequel le module de navigation (100) est installé ultérieurement sur le véhicule (302).
